# FASCICULE DE BREVET EUROPEEN

(11) **EP 4 368 929 B1**
(45) Date de publication et mention de la délivrance du brevet: **04.06.2025**
(21) Numéro de dépôt: 23208500.1
(22) Date de dépôt: 08.11.2023
(51) Int. Cl.: F25J 3/02

(54) **PROCÉDÉ ET APPAREIL DE DISTILLATION DE DIOXYDE DE CARBONE**
VERFAHREN UND VORRICHTUNG ZUR DESTILLATION VON KOHLENDIOXID
METHOD AND APPARATUS FOR DISTILLATION OF CARBON DIOXIDE

(30) Priorité: 10.11.2022 FR 2211747
(43) Date de publication de la demande: 15.05.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LECLERC, Mathieu, 94503 CHAMPIGNY SUR MARNE (FR); MADELAINE, Laurette, 94503 CHAMPIGNY SUR MARNE (FR)
(74) Mandataire: Air Liquide

(56) Documents cités:
- WO-A1-2022/184794
- CN-U- 214 620 294
- JP-A- H04 359 785
- US-A1- 2011 296 867
- US-A1- 2021 396 465

## Description

La présente invention concerne un procédé et un appareil de distillation d'un mélange de dioxyde de carbone et au moins un composant plus léger que le dioxyde de carbone, tel que l'oxygène, l'argon, l'azote, le monoxyde de carbone, le méthane, l'hydrogène, l'éthane ou un autre hydrocarbure selon les préambules des revendications 1 et 8 respectivement. Un tel procédé et un tel appareil sont connus de WO-A-2022 184794.

La production de CO2 de qualité alimentaire requiert une purification du CO2 liquide avancée nécessitant des investissements et/ou des consommations énergétiques importantes.

Dans les procédés de capture de CO2 par voie cryogénique ou de liquéfaction du CO2, l'intégration et l'optimisation d'une étape de distillation afin d'éliminer les hydrocarbures (l'éthane notamment) du CO2 est donc clé afin d'optimiser les coûts de capture du CO2.

Dans les procédés de capture du CO2 par voie cryogénique, le froid aux plus basses températures est généralement issu de la détente de CO2 liquide à une pression proche de son point triple et de sa vaporisation face au courant à refroidir.

Ce CO2 est le plus souvent issu de la dernière étape de purification du courant traité dont on a extrait le CO2. En particulier, dans le cas d'une purification avancée, il provient de la cuve de la colonne à distiller. Le gaz de tête de la colonne est le plus souvent recyclé au compresseur du courant à purifier en amont de la séparation cryogénique ou évacué du procédé comme gaz résiduaire.

Dans le cas d'une production de CO2 liquide, le seul liquide soutiré est le liquide de cuve et aucun liquide n'est soutiré de la colonne à distiller à un point intermédiaire de la colonne.

US2011/296867 décrit un procédé dans lequel un liquide est soutiré à un niveau intermédiaire de la colonne, vaporisé et renvoyé à la colonne sous forme gazeuse.

### Problème résolu par l'invention

L'invention permet réduire la consommation énergétique liée à la distillation du CO2 liquide en réduisant la quantité de gaz de rebouillage injecté en cuve de colonne à distiller.

Le liquide intermédiaire vaporisé est comprimé dans le compresseur du mélange gazeux, ce qui simplifie l'appareil.

### Description de l'invention

Selon un objet de l'invention, il est prévu un procédé de distillation d'un mélange gazeux de CO2 et au moins un composant plus léger que le CO2 contenant les étapes suivantes :
i) Compression du mélange gazeux dans un compresseur pour produire un mélange gazeux à refroidir
ii) Refroidissement et condensation partielle ou totale du mélange gazeux à refroidir afin d'obtenir un débit liquide enrichi en CO2
iii) Envoi dans une partie supérieure d'une colonne de distillation du débit liquide enrichi en CO2 ou un débit liquide formé en enrichissant le débit liquide enrichi encore plus en CO2 pour le séparer en un gaz enrichi en l'au moins un composant plus léger et appauvri en CO2 en tête de la colonne et un liquide riche en CO2 en cuve de la colonne, la colonne de distillation comprenant une partie supérieure, une partie inférieure, une tête et une cuve
iv) Envoi d'un débit de gaz enrichi en CO2 en cuve de la colonne afin de générer un courant ascendant dans la colonne
v) Extraction d'un courant gazeux appauvri en CO2 en tête de la colonne
vi) Extraction d'un produit liquide riche en CO2 en cuve de colonne
vii) Extraction d'un courant de CO2 liquide partiellement purifié à un niveau intermédiaire de la colonne au moins un plateau théorique en dessous de la tête de la colonne et au moins un plateau théorique au-dessus de la cuve de la colonne et
viii) Réchauffement et vaporisation d'au moins une partie du courant extrait au niveau intermédiaire de la colonne par échange de chaleur avec le mélange gazeux qui se refroidit dans l'étape ii) et
   et
ix) Compression d'au moins une partie du courant vaporisé dans le compresseur (C) avec le mélange gazeux.

Selon d'autres aspects facultatifs :
- au moins une partie du courant gazeux appauvri en CO2 est envoyée à l'air.
- une partie du liquide riche en CO2 se réchauffe contre le mélange gazeux pour le refroidir selon l'étape i) et puis est envoyé en cuve de la colonne, constituant le débit de gaz enrichi en CO2 de l'étape iii).
- une partie des frigories nécessaires pour la distillation est fournie par un cycle fermé de réfrigération.
- au moins une partie du courant vaporisé est comprimée dans un compresseur du cycle fermé de réfrigération.
- le courant soutiré à un niveau intermédiaire est soutiré entre le premier et le N/2ème plateau théorique de la colonne, la colonne comprenant N plateaux théoriques, le premier étant en cuve de la colonne.
- le courant soutiré à un niveau intermédiaire est soutiré entre le N/4ème et le N/2ème plateau théorique de la colonne.

Selon un autre objet de l'invention, il est prévu un appareil de distillation d'un mélange gazeux de CO2 et au moins un composant plus léger que le CO2 comprenant :
- une colonne de distillation comprenant une partie supérieure, une partie inférieure, une tête et une cuve ;
- un compresseur pour comprimer le mélange gazeux ;
- un échangeur de chaleur relié au compresseur pour refroidir et condenser partiellement ou totalement du mélange gazeux afin d'obtenir un débit liquide enrichi en CO2 ;
- une conduite pour envoyer dans une partie supérieure de la colonne de distillation du débit liquide enrichi en CO2 ou d'un débit liquide formé en enrichissant le débit liquide enrichi encore plus en CO2 pour le séparer en un gaz enrichi en l'au moins un composant plus léger et appauvri en CO2 en tête de la colonne et un liquide riche en CO2 en cuve de la colonne ;
- une conduite pour envoyer un débit de gaz enrichi en CO2 en cuve de la colonne afin de générer un courant ascendant dans la colonne ;
- une conduite pour extraire d'un courant gazeux appauvri en CO2 en tête de la colonne ;
- une conduite pour extraire un produit liquide riche en CO2 en cuve de colonne ;
- une conduite pour extraire un courant de CO2 liquide partiellement purifié à un niveau intermédiaire de la colonne au moins un plateau théorique en dessous de la tête de la colonne et au moins un plateau théorique au-dessus de la cuve de la colonne et
- une conduite pour envoyer le courant extrait au niveau intermédiaire de la colonne à l'échangeur de chaleur pour le vaporiser par échange de chaleur indirect avec le mélange gazeux qui se refroidit et
- une conduite pour envoyer le courant vaporisé de l'échangeur de chaleur au compresseur pour y être comprimé.

De préférence, l'appareil ne comprend pas de conduite reliant la cuve de la colonne pour envoyer une partie du produit liquide riche en CO2 au compresseur.

L'appareil peut comprendre :
- des moyens pour rebouillir le liquide de cuve de la colonne
- des moyens pour vaporiser le courant de CO2 liquide partiellement purifié après détente
- des moyens pour vaporiser le courant de CO2 liquide partiellement purifié sans l'avoir détendu
- des moyens pour envoyer le courant gazeux appauvri en CO2 de la tête de la colonne au compresseur pour y être comprimé
- des moyens pour envoyer le courant gazeux appauvri en CO2 de la tête de la colonne au compresseur pour y être comprimé après réchauffage dans l'échangeur de chaleur
- le courant gazeux appauvri en CO2 est envoyé dans le compresseur à un point en aval du point auquel est envoyé le courant partiellement purifié et vaporisé
- des moyens pour envoyer une partie du liquide riche en CO2 se réchauffer contre le mélange gazeux pour le refroidir selon l'étape i) et des moyens pour envoyer la partie du liquide réchauffé en cuve de la colonne, comme gaz de rebouillage
- un premier séparateur de phases relié au compresseur pour recevoir le mélange gazeux comprimé et une conduite pour envoyer un liquide du premier séparateur de phases en tête de la colonne
- un deuxième séparateur de phases relié au premier séparateur de phases pour recevoir un gaz provenant du premier séparateur de phases partiellement condensé dans l'échangeur de chaleur et une conduite pour envoyer un liquide du deuxième séparateur de phases en tête de la colonne
- une conduite reliée au deuxième séparateur de phases et à l'échangeur de chaleur
- l'échangeur de chaleur a deux extrémités, dont une relié au deuxième séparateur de phases et une reliée à la sortie du compresseur.

L'invention concerne un procédé qui peut comprendre les caractéristiques suivantes :
- Injecter le CO2 liquide à purifier dans la colonne à distiller
- Rebouillir le liquide obtenu en cuve de colonne afin d'obtenir le CO2 à la spécification requise
- Vaporiser le courant de CO2 liquide partiellement purifié (après détente ou non) contre le courant à traiter et/ou à liquéfier
- Comprimer le courant de CO2 gazeux partiellement purifié dans un compresseur de cycle de réfrigération et/ou dans le compresseur du courant à purifier en amont de la séparation cryogénique

Cette configuration permet de diminuer la quantité de CO2 vaporisé injecté en cuve de colonne car la quantité de liquide à purifier est réduite de l'action de l'extraction intermédiaire. Cela a pour conséquence la réduction de la quantité vaporisée au sein de la colonne et donc du débit de gaz de tête. Comme ce dernier est le plus souvent recyclé au compresseur du courant à purifier en amont de la séparation cryogénique, la consommation énergétique est alors réduite. Dans le cas où le gaz de tête de la colonne est considéré comme un résidu et extrait de l'unité de capture, cela permet de réduire les pertes en CO2 en tête de colonne augmentant le rendement de l'unité.

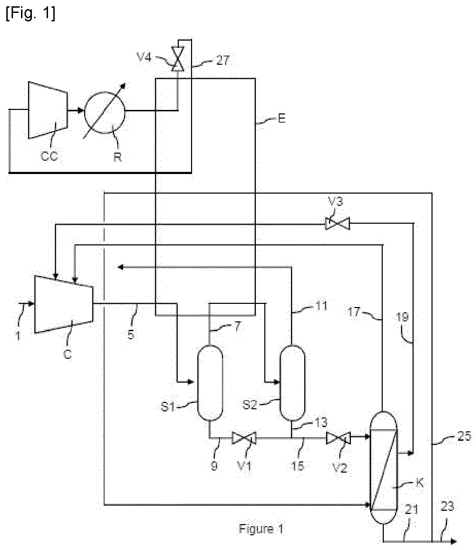

L'invention sera décrite de manière plus détaillée en se référant à la figure 1 qui illustre un procédé de distillation d'un mélange gazeux comprenant du CO2 et au moins un composant plus léger par condensation partielle et distillation.

Un débit 5 d'un mélange gazeux comprend du CO2 et au moins un composant plus léger que le CO2 tel que l'oxygène, l'argon, l'azote, le monoxyde de carbone, le méthane, l'hydrogène, l'éthane ou un autre hydrocarbure...

Ce débit 5 est comprimé dans un compresseur C, sachant que la pression de distillation est nécessairement au-dessus de 5,2 bars. Le débit 5 se condense partiellement dans un échangeur de chaleur E, sort de l'échangeur et est séparé dans un séparateur de phases S1, formant un liquide 9 enrichi en CO2 et appauvri en le composant plus léger et un gaz appauvri en CO2 et enrichi en l'au moins un composant léger 7. Le débit 5 commence à se condenser partiellement à une température supérieure à la température de vaporisation d'ammoniac et termine de se condenser partiellement par échange de chaleur avec les liquides 19, 25 provenant de la colonne K. Le liquide 9 est détendu dans une vanne V1 et envoyé en tête d'une colonne de distillation K contenant des plateaux ou des garnissages pour favoriser l'échange de masse et de chaleur. Du fait de la détente dans la vanne, la pression du débit 5 sera légèrement supérieure à celle de la colonne K.

Si nécessaire une deuxième étape de condensation partielle peut suivre dans lequel le gaz 7 se condense partiellement dans l'échangeur de chaleur E et est envoyé à un deuxième séparateur de phases S2. Dans ce séparateur se forment un liquide 13 enrichi en CO2 et appauvri en le composant plus léger et un gaz appauvri en CO2 et enrichi en l'au moins un composant léger 11. Le liquide 13 est envoyé en tête d'une colonne de distillation K, ici en se mélangeant au débit détendu dans la vanne V1 pour former un liquide 15 qui est détendu dans une vanne V2 en amont de la colonne K. Le gaz 11 se réchauffe dans l'échangeur de chaleur E.

Un gaz de tête 17 de la colonne K appauvri en CO2 et enrichi en l'au moins un composant léger est réchauffé dans l'échangeur E pour refroidir le mélange et est envoyé se comprimer dans le compresseur C.

Un liquide 19 est soutiré de la colonne au moins un plateau théorique en dessous de la tête de la colonne K et au moins un plateau théorique au-dessus de la cuve de la colonne K. Il est détendu dans la vanne V3 et se vaporise dans l'échangeur E avant d'être envoyé se comprimer dans le compresseur C avec le mélange gazeux pour ensuite être séparé par condensation partielle et distillation.

Ici le liquide 19 est illustré comme étant soutiré dans la partie supérieure de la colonne K. Toutefois, selon les calculs, une meilleure performance est obtenue en soutirant le liquide 19 dans la partie inférieure de la colonne, c'est à dire à un niveau intermédiaire entre le premier et le N/2ème plateau théorique de la colonne, la colonne comprenant N plateaux théoriques, le premier étant en cuve de la colonne. Si la colonne comprend un nombre impair de plateaux théoriques, la valeur de N/ 2 est arrondie à un nombre entier vers le bas.

De préférence le courant 19 soutiré à un niveau intermédiaire est soutiré entre le N/4ème et le N/2ème plateau théorique de la colonne.

Si la colonne comprend un nombre impair de plateaux théoriques ou un nombre qui n'est pas un multiple de 4, la valeur de N/ 2 est arrondi à un nombre entier vers le bas et la valeur de N/4 à un nombre entier vers le haut.

Un liquide 21 est soutiré en cuve de la colonne étant riche en CO2, donc contenant au moins 80% mol de CO2. Une partie 23 de ce liquide sert de produit liquide et le reste 25 se vaporise dans l'échangeur de chaleur E et est envoyée sous forme gazeuse en cuve de la colonne K pour fournir du rebouillage, sans avoir été réchauffée dans l'échangeur de chaleur E.

Des frigories pour le procédé peuvent être fournies par un circuit fermé de réfrigération, comprenant un compresseur de cycle CC et un refroidisseur R. Le fluide de cycle est de préférence du CO2.

## Revendications

1. Procédé de distillation d'un mélange gazeux de CO2 et au moins un composant plus léger que le CO2 contenant les étapes suivantes :
i) Compression du mélange gazeux (1) dans un compresseur (C) pour produire un mélange gazeux (5) à refroidir
ii) Refroidissement et condensation partielle ou totale du mélange gazeux à refroidir (5) afin d'obtenir un débit liquide (15) enrichi en CO2
iii) Envoi dans une partie supérieure d'une colonne de distillation (K) du débit liquide enrichi en CO2 ou un débit liquide formé en enrichissant le débit liquide enrichi encore plus en CO2 pour le séparer en un gaz enrichi en l'au moins un composant plus léger et appauvri en CO2 en tête de la colonne et un liquide riche en CO2 en cuve de la colonne, la colonne de distillation comprenant une partie supérieure, une partie inférieure, une tête et une cuve
iv) Envoi d'un débit de gaz (25) enrichi en CO2 en cuve de la colonne afin de générer un courant ascendant dans la colonne
v) Extraction d'un courant gazeux (17) appauvri en CO2 en tête de la colonne
vi) Extraction d'un produit liquide (21) riche en CO2 en cuve de colonne
**caractérisé en ce que** le procédé contient les étapes suivantes:
vii) Extraction d'un courant de CO2 liquide partiellement purifié (19) à un niveau intermédiaire de la colonne au moins un plateau théorique en dessous de la tête de la colonne et au moins un plateau théorique au-dessus de la cuve de la colonne
viii) Réchauffement et vaporisation d'au moins une partie du courant extrait au niveau intermédiaire de la colonne pour former un courant vaporisé (19) par échange de chaleur avec le mélange gazeux qui se refroidit dans l'étape ii)
et
ix) Compression d'au moins une partie du courant vaporisé (19) dans le compresseur (C) avec le mélange gazeux.

2. Procédé selon la revendication 1 dans lequel une partie du courant gazeux appauvri en CO2 (17) est envoyée à l'air.

3. Procédé selon l'une des revendications précédentes dans lequel une partie (25) du produit liquide riche en CO2 (21) se réchauffe contre le mélange gazeux (1,5) pour le refroidir selon l'étape i) et puis est envoyée en cuve de la colonne, constituant le débit de gaz enrichi en CO2 de l'étape iii).

4. Procédé selon l'une des revendications précédentes dans lequel une partie des frigories nécessaires pour la distillation est fournie par un cycle fermé de réfrigération (CC, R, V4, 27).

5. Procédé selon la revendication 4 dans lequel une partie du courant vaporisé est comprimée dans un compresseur (CC) du cycle fermé de réfrigération.

6. Procédé selon l'une des revendications précédentes dans lequel le courant (19) soutiré à un niveau intermédiaire est soutiré entre le premier et le N/2ème plateau théorique de la colonne (K), la colonne comprenant N plateaux théoriques, le premier étant en cuve de la colonne.

7. Procédé selon la revendication précédente dans lequel le courant (19) soutiré à un niveau intermédiaire est soutiré entre le N/4ème et le N/2ème plateau théorique de la colonne (K).

8. Appareil de distillation d'un mélange gazeux (1,5) de CO2 et au moins un composant plus léger que le CO2 comprenant :
• une colonne de distillation (K) comprenant une partie supérieure, une partie inférieure, une tête et une cuve ;
• un compresseur (C) pour comprimer le mélange gazeux ;
• un échangeur de chaleur (E) relié au compresseur pour refroidir et condenser partiellement ou totalement du mélange gazeux afin d'obtenir un débit liquide enrichi en CO2 (9, 13, 15) ;
• une conduite pour envoyer dans une partie supérieure de la colonne de distillation du débit liquide (15) enrichi en CO2 ou d'un débit liquide formé en enrichissant le débit liquide enrichi encore plus en CO2 pour le séparer en un gaz enrichi en l'au moins un composant plus léger et appauvri en CO2 (17) en tête de la colonne et un liquide riche en CO2 en cuve de la colonne (21) ;
• une conduite pour envoyer un débit de gaz (25) enrichi en CO2 en cuve de la colonne afin de générer un courant ascendant dans la colonne ;
• une conduite pour extraire d'un courant gazeux appauvri en CO2 (17) en tête de la colonne ;
• une conduite pour extraire un produit liquide (23) riche en CO2 en cuve de colonne ;
**caractérisé en ce que** l'appareil comprend:
• une conduite pour extraire un courant de CO2 liquide partiellement purifié (19) à un niveau intermédiaire de la colonne au moins un plateau théorique en dessous de la tête de la colonne et au moins un plateau théorique au-dessus de la cuve de la colonne ;
• une conduite pour envoyer le courant extrait au niveau intermédiaire de la colonne à l'échangeur de chaleur pour le vaporiser par échange de chaleur indirect avec le mélange gazeux qui se refroidit et
• une conduite pour envoyer le courant vaporisé de l'échangeur de chaleur au compresseur pour y être comprimé.

9. Appareil selon la revendication 8 ne comprenant pas de conduite reliant la cuve de la colonne (K) pour envoyer une partie du produit liquide riche en CO2 au compresseur (C).

10. Appareil selon la revendication 8 ou 9 comprenant des moyens pour envoyer une partie (25) du produit liquide riche en CO2 (21) se réchauffer contre le mélange gazeux (1,5) pour le refroidir selon l'étape i) et des moyens pour envoyer la partie du liquide réchauffée en cuve de la colonne (K), comme gaz de rebouillage.

11. Appareil selon la revendication 8, 9 ou 10 comprenant des moyens pour envoyer le courant gazeux appauvri en CO2 (17) de la tête de la colonne (K) au compresseur (C) pour y être comprimé.

12. Appareil selon l'une des revendications 8 à 11 comprenant un premier séparateur de phases (S1) relié au compresseur (C) pour recevoir le mélange gazeux comprimé et une conduite pour envoyer un liquide (9) du premier séparateur de phases en tête de la colonne.

13. Appareil selon la revendication 12 comprenant un deuxième séparateur de phases (S2) relié au premier séparateur de phases (S1) pour recevoir un gaz (7) provenant du premier séparateur de phases partiellement condensé dans l'échangeur de chaleur (E) et une conduite pour envoyer un liquide (13) du deuxième séparateur de phases en tête de la colonne (K).

14. Appareil selon la revendication 13 comprenant une conduite reliée au deuxième séparateur de phases (S2) et à l'échangeur de chaleur (E).

15. Appareil selon la revendication 14 dans lequel l'échangeur de chaleur (E) a deux extrémités, dont une relié au deuxième séparateur de phases (S2) et une reliée à la sortie du compresseur (C).

## Patentansprüche

1. Verfahren zur Destillation eines gasförmigen Gemisches aus CO2 und mindestens einer Komponente, die leichter als das CO2 ist, umfassend die folgenden Schritte:
i) Verdichten des gasförmigen Gemisches (1) in einem Kompressor (C), um ein zu kühlendes gasförmiges Gemisch (5) zu erzeugen
ii) Kühlen und teilweises oder vollständiges Kondensieren des zu kühlenden gasförmigen Gemisches (5), um einen an CO2 angereicherten flüssigen Volumenstrom (15) zu erhalten
iii) Leiten des an CO2 angereicherten flüssigen Volumenstroms oder eines flüssigen Volumenstroms, der gebildet wird, indem der angereicherte flüssige Volumenstrom noch stärker an CO2 angereichert wird, in einen oberen Teil einer Destillationskolonne (K), um ihn in ein an der mindestens einen leichteren Komponente angereichertes und an CO2 abgereichertes Gas am Kopf der Kolonne und eine an CO2 reiche Flüssigkeit im Sumpf der Kolonne zu trennen, wobei die Destillationskolonne einen oberen Teil, einen unteren Teil, einen Kopf und einen Sumpf umfasst
iv) Leiten eines an CO2 angereicherten Gasvolumenstroms (25) in den Sumpf der Kolonne, um einen Aufwärtsstrom in der Kolonne zu generieren
v) Abziehen eines an CO2 abgereicherten gasförmigen Stroms (17) am Kopf der Kolonne
vi) Abziehen eines an CO2 reichen flüssigen Produkts (21) am Kolonnensumpf, **dadurch gekennzeichnet, dass** das Verfahren die folgenden Schritte umfasst:
vii) Abziehen eines teilweise gereinigten flüssigen CO2-Stroms (19) auf einer Zwischenebene der Kolonne mindestens einen theoretischen Boden unterhalb des Kopfes der Kolonne und mindestens einen theoretischen Boden oberhalb des Sumpfes der Kolonne
viii) Erwärmen und Verdampfen mindestens eines Teils des auf der Zwischenebene der Kolonne abgezogenen Stroms, um einen verdampften Strom (19) durch Wärmeaustausch mit dem gasförmigen Gemisch zu bilden, das sich im Schritt ii) abkühlt
und
ix) Verdichten mindestens eines Teils des verdampften Stroms (19) in dem Kompressor (C) mit dem gasförmigen Gemisch.

2. Verfahren nach Anspruch 1, wobei ein Teil des an CO2 abgereicherten gasförmigen Stroms (17) ins Freie geleitet wird.

3. Verfahren nach einem der vorhergehenden Ansprüche, wobei ein Teil (25) des an CO2 reichen flüssigen Produkts (21) sich an dem gasförmigen Gemisch (1,5) erwärmt, um es gemäß dem Schritt i) zu kühlen, und dann in den Sumpf der Kolonne geleitet wird, wobei es den an CO2 angereicherten Gasvolumenstrom des Schritts iii) bildet.

4. Verfahren nach einem der vorhergehenden Ansprüche, wobei ein Teil der zur Destillation erforderlichen Frigorien von einem geschlossenen Kühlkreislauf (CC, R, V4, 27) bereitgestellt wird.

5. Verfahren nach Anspruch 4, wobei ein Teil des verdampften Stroms in einem Kompressor (CC) des geschlossenen Kühlkreislaufs verdichtet wird.

6. Verfahren nach einem der vorhergehenden Ansprüche, wobei der auf einer Zwischenebene entnommene Strom (19) zwischen dem ersten und dem N/2-ten theoretischen Boden der Kolonne (K) entnommen wird, wobei die Kolonne N theoretische Böden umfasst, wobei der erste am Sumpf der Kolonne ist.

7. Verfahren nach dem vorhergehenden Anspruch, wobei der auf einer Zwischenebene entnommene Strom (19) zwischen dem N/4-ten und dem N/2-ten theoretischen Boden der Kolonne (K) entnommen wird.

8. Gerät zur Destillation eines gasförmigen Gemisches (1,5) aus CO2 und mindestens einer Komponente, die leichter als das CO2 ist, umfassend:
• eine Destillationskolonne (K), die einen oberen Teil, einen unteren Teil, einen Kopf und einen Sumpf umfasst;
• einen Kompressor (C), um das gasförmige Gemisch zu verdichten;
• einen Wärmetauscher (E), der mit dem Kompressor verbunden ist, um gasförmiges Gemisch zu kühlen und teilweise oder vollständig zu kondensieren, um einen an CO2 angereicherten flüssigen Volumenstrom (9, 13, 15) zu erhalten;
• eine Leitung, um einen an CO2 angereicherten flüssigen Volumenstrom (15) oder einen flüssigen Volumenstrom, der gebildet wird, indem der angereicherte flüssige Volumenstrom noch stärker an CO2 angereichert wird, in einen oberen Teil der Destillationskolonne zu leiten, um ihn in ein an der mindestens einen leichteren Komponente angereichertes und an CO2 abgereichertes Gas (17) am Kopf der Kolonne und eine an CO2 reiche Flüssigkeit im Sumpf der Kolonne (21) zu trennen;
• eine Leitung, um einen an CO2 angereicherten Gasvolumenstrom (25) in den Sumpf der Kolonne zu leiten, um einen Aufwärtsstrom in der Kolonne zu generieren;
• eine Leitung, um einen an CO2 abgereicherten gasförmigen Strom (17) am Kopf der Kolonne abzuziehen;
• eine Leitung, um ein an CO2 reiches flüssiges Produkt (23) im Sumpf der Kolonne abzuziehen;
**dadurch gekennzeichnet, dass** das Gerät umfasst:
• eine Leitung, um einen teilweise gereinigten flüssigen CO2-Strom (19) auf einer Zwischenebene der Kolonne mindestens einen theoretischen Boden unterhalb des Kopfes der Kolonne und mindestens einen theoretischen Boden oberhalb des Sumpfes der Kolonne abzuziehen;
• eine Leitung, um den auf der Zwischenebene der Kolonne abgezogenen Strom zu dem Wärmetauscher zu leiten, um ihn durch indirekten Wärmeaustausch mit dem gasförmigen Gemisch, das sich abkühlt, zu verdampfen, und
• eine Leitung, um den verdampften Strom von dem Wärmetauscher zu dem Kompressor zu leiten, damit er darin verdichtet wird.

9. Gerät nach Anspruch 8, das keine Leitung umfasst, die den Sumpf der Kolonne (K) verbindet, um einen Teil des an CO2 reichen flüssigen Produkts zu dem Kompressor (C) zu leiten.

10. Gerät nach Anspruch 8 oder 9, umfassend Mittel, um einen Teil (25) des an CO2 reichen flüssigen Produkts (21) zum Erwärmen an dem gasförmigen Gemisch (1,5) zu leiten, um es gemäß dem Schritt i) zu kühlen, und Mittel, um den erwärmten Teil der Flüssigkeit als Verdampfungsgas in den Sumpf der Kolonne (K) zu leiten.

11. Gerät nach Anspruch 8, 9 oder 10, umfassend Mittel, um den an CO2 abgereicherten gasförmigen Strom (17) vom Kopf der Kolonne (K) zu dem Kompressor (C) zu leiten, um darin verdichtet zu werden.

12. Gerät nach einem der Ansprüche 8 bis 11, umfassend einen ersten Phasentrenner (S1), der mit dem Kompressor (C) verbunden ist, um das verdichtete gasförmige Gemisch aufzunehmen, und eine Leitung, um eine Flüssigkeit (9) von dem ersten Phasentrenner in den Kopf der Kolonne zu leiten.

13. Gerät nach Anspruch 12, umfassend einen zweiten Phasentrenner (S2), der mit dem ersten Phasentrenner (S1) verbunden ist, um ein von dem ersten Phasentrenner kommendes, in dem Wärmetauscher (E) teilweise kondensiertes Gas (7) aufzunehmen, und eine Leitung, um eine Flüssigkeit (13) von dem zweiten Phasentrenner in den Kopf der Kolonne (K) zu leiten.

14. Gerät nach Anspruch 13, umfassend eine Leitung, die mit dem zweiten Phasentrenner (S2) und mit dem Wärmetauscher (E) verbunden ist.

15. Gerät nach Anspruch 14, bei dem der Wärmetauscher (E) zwei Enden hat, davon ein mit dem zweiten Phasentrenner (S2) verbundenes und ein mit dem Ausgang des Kompressor (C) verbundenes.

## Claims

1. Process for distilling a gas mixture of CO2 and at least one component lighter than CO2, containing the following steps:
i) compressing the gas mixture (1) in a compressor (C) to produce a gas mixture (5) to be cooled
ii) cooling and partial or total condensation of the gas mixture to be cooled (5) so as to obtain a CO2-enriched liquid flow (15)
iii) sending the CO2-enriched liquid flow or a liquid flow formed by enriching the enriched liquid flow even more in CO2 to an upper part of a distillation column (K) so as to separate said liquid flow into a gas enriched in the at least one lighter component and depleted in CO2 at the top of the column and a CO2-rich liquid at the bottom of the column, the distillation column comprising an upper part, a lower part, a top and a bottom
iv) sending a CO2-enriched gas flow (25) to the bottom of the column so as to generate an upflow in the column
v) extracting a CO2-depleted gas stream (17) at the top of the column
vi) extracting a CO2-rich liquid product (21) at the bottom of the column, **characterized in that** the process contains the following steps:
vii) extracting a partially purified liquid CO2 stream (19) at an intermediate level of the column at least one theoretical plate below the top of the column and at least one theoretical plate above the bottom of the column
viii) heating and vaporizing at least part of the stream extracted at the intermediate level of the column to form a vaporized stream (19) by heat exchange with the gas mixture that cools in step ii)
and
ix) compressing at least part of the vaporized stream (19) in the compressor (C) with the gas mixture.

2. Process according to Claim 1, wherein part of the CO2-depleted gas stream (17) is vented to the air.

3. Process according to either of the preceding claims, wherein part (25) of the CO2-rich liquid product (21) heats up against the gas mixture (1, 5) so as to cool said gas mixture according to step i) and then is sent to the bottom of the column, constituting the CO2-enriched gas flow of step iii).

4. Process according to any of the preceding claims, wherein part of the cold energy needed for the distillation is supplied by a closed refrigeration cycle (CC, R, V4, 27).

5. Process according to Claim 4, wherein part of the vaporized stream is compressed in a compressor (CC) of the closed refrigeration cycle.

6. Process according to any of the preceding claims, wherein the stream (19) withdrawn at an intermediate level is withdrawn between the first and the N/2-th theoretical plate of the column (K), the column comprising N theoretical plates, the first being at the bottom of the column.

7. Process according to the preceding claim, wherein the stream (19) withdrawn at an intermediate level is withdrawn between the N/4-th and the N/2-th theoretical plate of the column (K).

8. Apparatus for distilling a gas mixture (1, 5) of CO2 and at least one component lighter than CO2, comprising:
• a distillation column (K) comprising an upper part, a lower part, a top and a bottom;
• a compressor (C) to compress the gas mixture;
• a heat exchanger (E) connected to the compressor to cool and partially or totally condense the gas mixture so as to obtain a CO2-enriched liquid flow (9, 13, 15);
• a line for sending the CO2-enriched liquid flow (15) or a liquid flow formed by enriching the enriched liquid flow even more in CO2 to an upper part of the distillation column so as to separate said liquid flow into a gas enriched in the at least one lighter component and depleted in CO2 (17) at the top of the column and a CO2-rich liquid at the bottom of the column (21);
• a line for sending a CO2-enriched gas flow (25) to the bottom of the column so as to generate an upflow in the column;
• a line for extracting a CO2-depleted gas stream (17) at the top of the column;
• a line for extracting a CO2-rich liquid product (23) at the bottom of the column;
**characterized in that** the apparatus comprises:
• a line for extracting a partially purified liquid CO2 stream (19) at an intermediate level of the column at least one theoretical plate below the top of the column and at least one theoretical plate above the bottom of the column;
• a line for sending the stream extracted at the intermediate level of the column to the heat exchanger to vaporize it by indirect heat exchange with the gas mixture which is cooled; and
• a line for sending the vaporized stream from the heat exchanger to the compressor to be compressed therein.

9. Apparatus according to Claim 8, not comprising a line connecting the bottom of the column (K) for sending part of the CO2-rich liquid product to the compressor (C) .

10. Apparatus according to Claim 8 or 9, comprising means for sending part (25) of the CO2-rich liquid product (21) to be heated up against the gas mixture (1, 5) so as to cool said gas mixture according to step i) and means for sending part of the heated liquid to the bottom of the column (K), as reboiling gas.

11. Apparatus according to Claim 8, 9 or 10, comprising means for sending the CO2-depleted gas stream (17) from the top of the column (K) to the compressor (C) to be compressed therein.

12. Apparatus according to any of Claims 8 to 11, comprising a first phase separator (S1) connected to the compressor (C) for receiving the compressed gas mixture and a line for sending a liquid (9) from the first phase separator to the top of the column.

13. Apparatus according to Claim 12, comprising a second phase separator (S2) connected to the first phase separator (S1) for receiving a gas (7) coming from the first phase separator that has been partially condensed in the heat exchanger (E) and a line for sending a liquid (13) from the second phase separator at the top of the column (K).

14. Apparatus according to Claim 13, comprising a line connected to the second phase separator (S2) and to the heat exchanger (E).

15. Apparatus according to Claim 14, wherein the heat exchanger (E) has two ends, of which one is connected to the second phase separator (S2) and one is connected to the outlet of the compressor (C).
